# EUROPÄISCHE PATENTSCHRIFT

(11) **EP 3 489 100 B1**
(45) Veröffentlichungstag und Bekanntmachung des Hinweises auf die Patenterteilung: **05.01.2022**
(21) Anmeldenummer: 18207878.2
(22) Anmeldetag: 22.11.2018
(51) Int. Cl.: B60T 8/1755, B60T 8/24, B60T 8/17, B60T 8/32, B62D 11/08

(54) **VERFAHREN UND VORRICHTUNG ZUM STEUERN EINER BREMSANLAGE EINES ANHÄNGERS WÄHREND EINER KURVENFAHRT**
METHOD AND DEVICE FOR CONTROLLING A BRAKING ASSEMBLY FOR A TRAILER WHILE CORNERING
PROCÉDÉ ET DISPOSITIF DE COMMANDE D'UNE INSTALLATION DE FREINAGE D'UNE REMORQUE LORS D'UN CONDUITE EN COURBE

(30) Priorität: 24.11.2017 DE 102017010867
(43) Veröffentlichungstag der Anmeldung: 29.05.2019
(73) Patentinhaber: KNORR-BREMSE Systeme für Nutzfahrzeuge GmbH, 80809 München (DE)
(72) Erfinder: MEDERER, Martin, 92318 Neumarkt (DE); FRY, Matthew, North Somersec, BS48 1PP (GB)

(56) Entgegenhaltungen:
- DE-A1-102011 001 384
- DE-A1-102015 013 761
- GB-A- 2 390 348
- US-A- 5 102 202
- US-A- 5 108 158
- US-A1- 2015 283 934
- US-A1- 2017 247 054

## Beschreibung

Die Erfindung geht aus von einem Verfahren zum Steuern der Bremsanlage eines Anhängers einer Zugfahrzeug-Anhängerkombination, insbesondere eines Anhängers mit wenigstens drei Achsen während einer Kurvenfahrt gemäß den Ansprüchen 1, 2 und 7, 8.

US 2017/247054A1 offenbart ein Verfahren zum Bereitstellen einer Warnung, dass ein Anhänger, der von einem Fahrzeug gezogen wird, in einer Kurve für den aktuellen Fahrzeugweg aus einer Fahrspur herauskommt, bevor das Fahrzeug in die Kurve einfährt. Das Verfahren bestimmt, dass sich das Fahrzeug der Kurve nähert, bestimmt einen Krümmungsradius der Kurve, bestimmt eine Spurweite der Fahrspur und identifiziert eine Länge des Anhängers. Das Verfahren bestimmt auch einen vorhergesagten Lenkwinkel des Fahrzeugs, der notwendig ist, um dem Krümmungsradius der Kurve zu folgen, einen Wendekreis des Fahrzeugs zum Durchfahren der Kurve unter Verwendung des vorhergesagten Lenkwinkels und einen Wendekreis des Anhängers unter Verwendung des Wendekreisradius des Fahrzeugs. Das Verfahren bestimmt dann anhand der Krümmung der Kurve und des Wenderadius des Anhängers, ob der Anhänger die Fahrspur verlässt.

Bei langen Anhängern mit wenigstens drei Achsen einer Zugfahrzeug-Anhängerkombination ergibt sich während einer Kurvenfahrt durch eine Kurve mit relativ geringem Radius und begrenzter Straßenbreite, beispielsweise beim stabilen Durchfahren eines Kreisverkehrs unter Umständen das Problem, dass der Anhänger die vorgegebene Ringfläche der Kurvenbahn entweder am inneren Radius und/oder am äußeren Radius nicht einhalten kann und dann zu weit nach innen und/oder zu weit nach außen schert, ohne dass eine Fahrinstabilität beispielsweise in Form von Über- oder Untersteuern vorliegt.

Aus diesem Grund fordert die europäische Gesetzgebung im Rahmen einer Kreisfahrtvorschrift derzeit, dass die von Kraftfahrzeugen und Fahrzeugzügen (Zugfahrzeug-Anhängerkombinationen) bei einer 360° Grad-Kreisfahrt überstrichene Ringfläche bei einem äußeren Radius von 12,5 m einen Innenradius von mindestens 5,3 m aufweist. Demnach benötigen bereits Sattelzüge mit europäischen Standardabmessungen und einer Liftachse eine Lenkachse, um die Kreisfahrtvorschrift mit gelifteter Liftachse zu erfüllen. Insbesondere Anhänger wie Auflieger oder Deichselanhänger mit wenigstens drei Achsen sind davon betroffen. Das Vorsehen von solchen Nachlauf-Lenkachsen ist jedoch relativ kostenintensiv.

Der vorliegenden Erfindung liegt die Aufgabe zugrunde, ein Verfahren und eine Vorrichtung der eingangs erwähnten Art zu schaffen, welche die oben geschilderten Probleme mit geringem Aufwand lösen.

Diese Aufgabe wird erfindungsgemäß durch die Merkmale der Ansprüche 1,2 sowie 7 und 8 gelöst. Vorteilhafte Weiterbildungen der Erfindung sind Gegenstand der beigefügten Unteransprüche.

### Offenbarung der Erfindung

Gemäß einer ersten Variante des erfindungsgemäßen Verfahrens zum Steuern der Bremsanlage eines Anhängers einer Zugfahrzeug-Anhängerkombination, insbesondere eines Anhängers mit wenigstens drei Achsen während einer Kurvenfahrt, bei dem die Bremsanlage des Anhängers durch eine elektronische Steuerung betätigbar ist, wird während einer stabilen Kurvenfahrt, insbesondere ohne Eingriff einer Fahrdynamik- oder Fahrstabilitätsregelung ein den Kurvenradius der befahrenen Kurve repräsentierendes Signal erzeugt, wobei wenn anhand dieses Signals festgestellt wird, dass der Kurvenradius einen vorgegebenen Kurveninnenradiusschwellwert unterschreitet, die Bremsen der kurvenäußeren Räder jeweils mit einem derartigen Radbremsschlupf eingebremst werden, dass ein Giermoment auf den Anhänger erzeugt wird, welches den Anhänger nach außen dreht. Es ist dabei klar, dass die kurveninneren Räder hierbei nicht abgebremst werden.

Mit anderen Worten wird der Kurvenradius der gerade befahrenen Kurve anhand von an Bord des Anhängers vorhandenen Mitteln bestimmt bzw. geschätzt und bei Vorliegen eines einen vorgegebenen Kurveninnenradiusschwellwert unterschreitenden Kurvenradius, d.h. in relativ engen Kurven die Bremsen der kurvenäußeren Räder jeweils mit einem vorzugsweise tolerierbaren Radbremsschlupf eingebremst. Dies erfolgt bei stabilem Fahrverhalten des Anhängers oder der Zugfahrzeug-Anhängerkombination insbesondere, ohne dass eine eventuell auf dem Anhänger vorhandene Fahrdynamik- oder Fahrstabilitätsregelung dabei eingreift. Insofern ist das erfindungsgemäße Verfahren unabhängig von einer bereits auf dem Anhänger vorhandenen Fahrdynamik- oder Fahrstabilitätsregelung. Der tolerierbare Radschlupf bei dieser Bremsung ist kleiner als ein vorgegebener Radbremsschlupf und wird vorzugsweise anhand eines tolerierbaren Reifenverschleißes festgelegt.

Durch das gezielte Einbremsen aller Räder des Anhängers der kurvenäußeren Seite, d.h. eines jeden kurvenäußeren Rades einer Achse entsteht daher ein Giermoment, welches den Anhänger aus der befahrenen Kurve herausdreht. Dadurch vergrößert sich der innere Radius, auf dem sich der Anhänger bewegt und ein Überfahren des kurveninneren Radius der befahrenen Kurve kann dadurch vermieden werden.

Demgemäß betrifft die Erfindung auch eine erste Variante einer Vorrichtung zum Steuern einer elektrisch steuerbaren Bremsanlage eines Anhängers einer Zugfahrzeug-Anhängerkombination, insbesondere eines Anhängers mit wenigstens drei Achsen während einer Kurvenfahrt, beinhaltend eine die Bremsanlage des Anhängers steuernde elektronische Steuerung, eventuell eine Fahrdynamik- oder Fahrstabilitätsregelung sowie eine Sensoreinrichtung, die während einer stabilen Kurvenfahrt, insbesondere ohne Eingriff der Fahrdynamik- oder Fahrstabilitätsregelung ein den Kurvenradius der befahrenen Kurve repräsentierendes Signal erzeugt und die elektronische Steuerung ausgebildet ist, dass wenn sie anhand dieses Signals feststellt, dass der Kurvenradius einen vorgegebenen Kurveninnenradiusschwellwert unterschreitet, die Bremsen der kurvenäußeren Räder jeweils mit einem derartigen Radbremsschlupf eingebremst werden, dass ein Giermoment auf den Anhänger erzeugt wird, welches den Anhänger nach außen dreht.

Um ein Überfahren des kurvenäußeren Radius der Ringfläche der Kurve zu vermeiden, sieht eine zweite Variante des erfindungsgemäßen Verfahrens vor, dass während einer stabilen Kurvenfahrt ohne Eingriff einer eventuell vorhandenen Fahrdynamik- oder Fahrstabilitätsregelung ein den Kurvenradius der befahrenen Kurve repräsentierendes Signal erzeugt wird, wobei wenn anhand dieses Signals festgestellt wird, dass der Kurvenradius einen vorgegebenen Kurvenaußenradiusschwellwert überschreitet, die Bremsen der kurveninneren Räder jeweils mit einem derartigen Radbremsschlupf eingebremst werden, dass ein Giermoment auf den Anhänger erzeugt wird, welches den Anhänger nach innen dreht. Es ist dabei klar, dass die kurvenäußeren Räder des Anhängers hierbei nicht abgebremst werden.

Durch das gezielte Einbremsen aller Räder des Anhängers der kurveninneren Seite, d.h. eines jeden kurveninneren Rades einer Achse entsteht ein Giermoment, welches den Anhänger in die befahrene Kurve hineindreht. Dadurch verringert sich der äußere Radius, auf dem sich der Anhänger bewegt und ein Überfahren des kurvenäußeren Radius der befahrenen Kurve kann dadurch vermieden werden.

Demgemäß betrifft die Erfindung auch eine zweite Variante einer Vorrichtung zum Steuern einer elektrisch steuerbaren Bremsanlage eines Anhängers einer Zugfahrzeug-Anhängerkombination, insbesondere eines Anhängers mit wenigstens drei Achsen während einer Kurvenfahrt, beinhaltend eine die Bremsanlage des Anhängers steuernde elektronische Steuerung, eventuell eine Fahrdynamik- oder Fahrstabilitätsregelung sowie eine Sensoreinrichtung, die während einer stabilen Kurvenfahrt, insbesondere ohne Eingriff der Fahrdynamik- oder Fahrstabilitätsregelung ein den Kurvenradius der befahrenen Kurve repräsentierendes Signal erzeugt und die elektronische Steuerung ausgebildet ist, dass wenn sie anhand dieses Signals feststellt, dass der Kurvenradius einen vorgegebenen Kurvenaußenradiusschwellwert überschreitet, die Bremsen der kurveninneren Räder jeweils mit einem derartigen Radbremsschlupf eingebremst werden, dass ein Giermoment auf den Anhänger erzeugt wird, welches den Anhänger nach innen dreht.

Bei beiden Varianten werden die Bremsen des Zugfahrzeugs von der elektronischen Steuerung vorzugsweise nicht zugespannt, so dass das Giermoment alleine durch die Bremsanlage des Anhängers erzeugt wird. Jedoch bleibt eine Betätigung der Bremsanlage des Zugfahrzeugs während der Kurvenfahrt z.B. aufgrund einer Betätigung durch den Fahrer oder einer automatischen Betätigung durch ein Fahrerassistenzsystem, wie etwa einer Fahrdynamikregelung wie ESP unbenommen.

Insgesamt wird durch die Erfindung daher ein sog. "steer-by-braking" während einer stabilen Kurvenfahrt realisiert, bei dem durch gezielte Steuerung alleine der Anhängerbremsen der Anhänger gelenkt wird.

In den Unteransprüchen werden in Bezug auf die Erfindung bevorzugte, diese jedoch nicht beschränkende Ausführungsformen beschrieben.

Weil auf modernen Anhänger in der Regel ein Gierratensensor beispielsweise im Rahmen einer Fahrdynamikregelung wie ESP oder Raddrehzahlsensoren ohnehin vorhanden sind, wird in dem den Kurvenradius der befahrenen Kurve repräsentierenden Signal vorzugsweise die Gierrate des Anhängers berücksichtigt. Alternativ oder zusätzlich könnte auch eine Raddrehzahldifferenz von Rädern unterschiedlicher Achsseiten als Grundlage für die Berechnung oder Schätzung des den Kurvenradius der befahrenen Kurve repräsentierenden Signals dienen. Aus der gemessenen Gierrate bzw. Raddrehzahldifferenz kann daher auf den Kurvenradius der gerade befahrenen Kurve geschlossen werden.

Weil die Erzeugung eines nennenswerten Giermoments auf den Anhänger aufgrund einer gezielten Abbremsung der kurveninneren oder kurvenäußeren Räder in der Regel erst ab einer gewissen Mindestgeschwindigkeit möglich ist, erfolgt das Einbremsen der kurvenäußeren Räder oder der kurveninneren Räder bevorzugt erst, wenn der Anhänger eine eine vorgegebene Mindestgeschwindigkeit überschreitende Geschwindigkeit aufweist. Zur Feststellung der Geschwindigkeit des Anhängers werden beispielsweise die Signale der im Rahmen von ESP oder ABS ohnehin vorhandenen Raddrehzahlsensoren herangezogen.

Um den Verschleiß der im Rahmen des Verfahrens abgebremsten kurvenäußeren oder kurveninneren Räder in Grenzen zu halten, werden die kurveninneren Räder oder die kurvenäußeren Räder jeweils mit einem tolerierbaren Radbremsschlupf abgebremst, der kleiner als ein vorgegebener Radbremsschlupf ist.

Insbesondere wird von der elektronischen Steuerung vorzugsweise für jedes abgebremste Rad ein Radbremsschlupf-Sollwert vorgegeben, auf welchen der gerade vorliegende Radbremsschlupf-Istwert eingeregelt wird. Auf diese Weise wird das auf den Anhänger wirkende Giermoment möglichst exakt festgelegt.

Vorzugsweise weist der Anhänger an wenigstens einer Achse ein 1-Kanal-Druckregelmodul sowie auf jeder Achsseite zur radindividuellen oder radgruppenindividuelle Bremsschlupfsteuerung oder -regelung ein ABS-Drucksteuerventil auf, wobei die elektronische Steuerung ausgebildet ist, dass zum bremsschlupfgeregelten Abbremsen von kurvenäußeren oder kurveninneren Rädern der Achse das zugeordnete ABS-Drucksteuerventil entsprechend dem vorgegebenen Radbremsschlupf getaktet in Öffnungs- und Schließstellung geschaltet und das dem anderen Rad oder den anderen Rädern dieser Achse zugeordnete ABS-Drucksteuerventil ausschließlich in Öffnungsstellung geschaltet wird.

Zusätzlich oder alternativ kann der Anhänger an wenigstens einer Achse ein Mehrkanal-Druckregelmodul aufweisen, wobei den dem Rad oder den Rädern jeder Achsseite ein eigener Kanal für eine radindividuelle oder radgruppenindividuelle Bremsschlupfsteuerung oder -regelung zugeordnet ist.

Die Erfindung betrifft auch einen Anhänger mit einer Vorrichtung wie oben beschrieben, vorzugsweise als Anhänger mit wenigstens drei Achsen, der ein Deichselanhänger oder ein Auflieger ist.

### Zeichnung

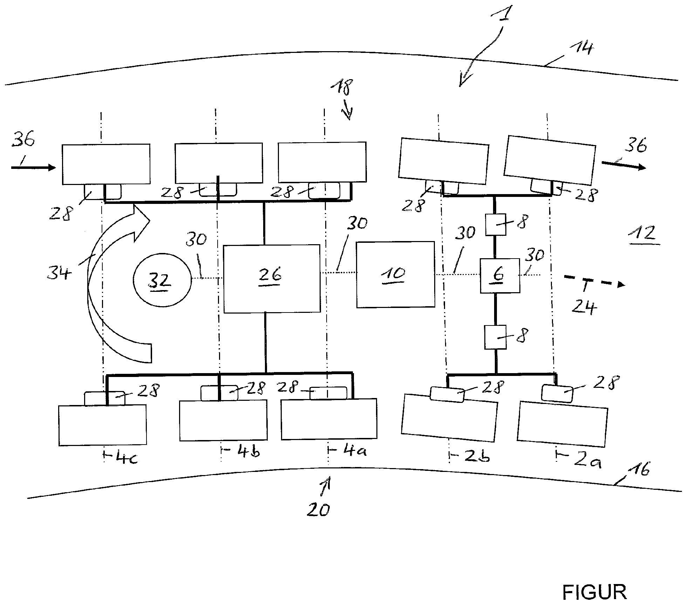

Die Erfindung wird nachstehend anhand eines Ausführungsbeispiels unter Bezugnahme auf die beigefügte Zeichnung näher beschrieben. Es zeigen die einzige Figur eine schematische Darstellung eines Deichselanhängers, welcher mit einer Vorrichtung gemäß eines bevorzugten Ausführungsbeispiels der Erfindung ausgestattet ist.

### Beschreibung des Ausführungsbeispiels

Der in der Figur stark schematisch gezeigte Anhänger 1 einer Zugfahrzeug-Anhänger-Kombination ist beispielsweise ein Deichselanhänger mit einer zwei Vorderachsen 2a, 2b aufweisenden, lenkbaren Deichsel und drei ungelenkten Hinterachsen 4a, 4b und 4c. Die Vorderachsen 2a, 2b sind dabei mit der in der Figur nicht näher dargestellten Deichsel verbunden, welche an das Zugfahrzeug ankuppelbar ist. Stattdessen könnte jedoch auch ein Sattelauflieger mit beispielsweise wenigstens drei ungelenkten Hinterachsen zur Ankopplung an das Zugfahrzeug vorgesehen sein.

Die beispielsweise elektro-pneumatische Bremsanlage des Deichselanhängers 1 weist für die beiden Vorderachsen 2a, 2b beispielsweise einziges 1-Kanal-Druckregelmodul 6 sowie zur radgruppenindividuellen Bremsschlupfsteuerung oder - regelung der beiden Räder jeder Achsseite ein in die Druckverbindung zwischen einem Arbeitsanschluss des 1-Kanal-Druckregelmoduls 6 und den betreffenden, hier nicht gezeigten Radbremszylindern geschaltetes ABS-Drucksteuerventil 8 auf. Solche ABS-Drucksteuerventile 8 sind hinreichend bekannt, beispielsweise aus EP 0 304 610 B1. Sie beinhalten jeweils ein Einlassventil und ein Auslassventil. Durch die ABS-Drucksteuerventile 8 sind schlupfgeregelte Bremsungen auch im Rahmen von ABS möglich, indem sie in Abhängigkeit der von der jeweils vorliegenden, von je einem Raddrehzahlsensor 28 gemessenen Raddrehzahl und dem daraus berechneten Bremsschlupf zum Druckhalten, Drucksteigern (bis maximal zum vorgegebenen Bremsdruck) oder Drucksenken elektronisch angesteuert werden können. Ein solches ABS-Drucksteuerventil 8 kann daher den vom 1-Kanal-Druckregelmodul 6 ausgesteuerten Bremsdruck ungehindert durchsteuern, halten oder senken. Eine Steigerung über den vom 1-Kanal-Druckregelmodul 6 vorgegebenen Bremsdruck hinaus ist indes nicht möglich. Raddrehzahlsensoren 28 sind bevorzugt an jedem Rad der beiden Vorderachsen 2a, 2b vorhanden.

In der Figur durchfährt der Deichselanhänger 1 eine (Rechts-)Kurve, deren befahrene Kurvenringfläche 12 durch einen kurvenäußeren Radius 14 und einen kurveninneren Radius 16 begrenzt ist. Demzufolge ergeben sich kurvenäußere Räder 18 und kurveninnere Räder 20 an den Vorderachsen 2a, 2b und an den Hinterachsen 4a bis 4c. Die Fahrtrichtung der mit den Vorderachsen 2a, 2b verbundenen Deichsel ist dann in der Figur durch den gestrichelten Pfeil 24 symbolisiert.

Darüber hinaus ist auf dem Deichselanhänger 1 eine elektronische Steuerung 10 vorhanden, die ausgebildet ist bzw. implementierte Algorithmen aufweist, dass das der entsprechenden Achsseite - rechts oder links - zugeordnete ABS-Drucksteuerventil 8 getaktet geschaltet wird, um an den kurvenäußeren Rädern 18 oder den kurveninneren Rädern 20 der Vorderachsen 2a, 2b einen vorgegebenen Bremsschlupf zu erzeugen. Das 1-Kanal-Druckregelmodul 6 erzeugt dann für beide Achsseiten zwar den gleichen Bremsdruck. Dieser wird aber auf einer Achsseite durch das dann in Schließstellung geschaltete ABS-Drucksteuerventil gegenüber den Radbremszylindern dieser Achsseite abgesperrt, aber auf der gegenüber liegenden Achsseite durch das dortige, in Durchgangsstellung geschaltete ABS-Drucksteuerventil bis zu den betreffenden Radbremszylindern durchgesteuert.

An den drei Hinterachsen 4a bis 4c ist hingegen ein 2-Kanal-Druckregelmodul 26 vorhanden, wobei den drei Rädern jeder Achsseite ein eigener Kanal für eine radgruppenindividuelle Bremsschlupfsteuerung oder -regelung zugeordnet ist. Weiterhin ist auch dort vorzugsweise an jedem Rad ein Raddrehzahlsensor 28 vorhanden. Die Raddrehzahlsensoren 28 melden die Raddrehzahl des betreffenden Rades an das Druckregelmodul 26, welches diese Signale dann an die elektronische Steuerung 10 weiter schleift.

Das 1-Kanal-Druckregelmodul 6 sowie das 2-Kanal-Druckregelmodul 26 beinhalten in bekannter Weise im Rahmen eines elektrischen Kanals oder Kreises jeweils eine elektromagnetische Ventileinrichtung mit einer Einlass/Auslassventilkombination, die ein Relaisventil pneumatisch steuert, um einen von einem anhängerseitigen, hier nicht gezeigten Druckluftvorrat abgeleiteten Bremsdruck an die Radbremsen in Form von pneumatischen Bremszylindern auszusteuern. Weiterhin ist in den Druckregelmoduln für jeden Kanal ein Drucksensor vorhanden, mit dem der ausgesteuerte Ist-Bremsdruck gemessen und durch elektrische Signale eines lokalen elektronischen Steuergeräts des betreffenden Druckregelmoduls, mit denen die betreffende elektromagnetische Ventileinrichtung gesteuert wird, an einen durch die Bremsanforderung vorgegebenen Soll-Bremsdruck angeglichen wird. Die den Soll-Bremsdruck repräsentierenden elektrischen Signale empfangen die lokalen Steuergeräte der Druckregelmodule über einen Anhängerdatenbus 30, der über eine Kupplung an einen Zugfahrzeugdatenbus angekoppelt ist. Auf diesem Weg können die lokalen Steuergeräte in den Druckregelmoduln 6, 26 elektrische Bremsanforderungssignale eines zentralen Bremssteuergeräts des Zugfahrzeugs empfangen.

Parallel hierzu werden die Druckregelmoduln 6, 26 über den Kupplungskopf "Bremse" mit einem in einem elektropneumatischen Anhängersteuermodul im Zugfahrzeug erzeugten Bremssteuerdruck versorgt, welcher als pneumatische Redundanz zur Erzeugung des Bremsdrucks dient, wenn der elektrische Kreis oder Kanal ausgefallen ist. Um eine Versorgung des Deichselanhängers mit Druckluft sicher zu stellen, ist außerdem ein Kupplungskopf "Vorrat" vorhanden, über welchen der auf dem Deichselanhänger 1 verbaute Druckluftvorrat mit Vorratsluft aus dem Zugfahrzeug versorgt wird. Dieser anhängerseitige Druckluftvorrat ist auch an die beiden Druckregelmoduln 6, 26 angeschlossen, damit diese auf der Basis des Vorratsdrucks einen Bremsdruck abhängig von der Bremsanforderung modulieren können.

Die lokalen Steuergeräte der Druckregelmoduln 6, 26 kommunizieren über den Anhängerdatenbus 30 mit der elektronischen Steuerung 10 sowie über hier nicht gezeigte elektrische Signalleitungen mit den Raddrehzahlsensoren 28 und einem auf dem Deichselanhänger verbauten Gierratensensor 32. Das lokale Steuergerät des Druckregelmoduls 26 ist von der elektronischen Steuerung 10 ansteuerbar, um die kurvenäußeren Räder 18 oder die kurveninneren Räder 16 der Hinterachsen 4a bis 4c mit einem vorgegebenen Bremsschlupf abzubremsen. Insbesondere ist eine ABS-Logik vorhanden, um übermäßigen Bremsschlupf generell zu vermeiden.

Mit den beiden Druckregelmoduln 6, 26 sind daher achsseitenweise radgruppenindividuelle Bremsungen und insbesondere eine radgruppenindividuelle Bremsschlupfregelung für die Räder 18, 20 auf jeder Achsseite möglich, d.h. die Bremsschlüpfe der kurvenäußeren Räder 18 und die Bremsschlüpfe der kurveninneren Räder 20 des Deichselanhängers 1 können getrennt voneinander und insbesondere unabhängig von der Bremsanlage des Zugfahrzeugs gesteuert oder geregelt werden.

Insgesamt ist hier beispielsweise ein 6S/3M-System realisiert, mit sechs Raddrehzahlsensoren 28 und 3 Modulkanälen. Alternativ könnten den drei Hinterachsen 4a bis 4c ebenfalls ein 1-Kanal-Druckregelmodul und zwei ABS-Drucksteuerventile 8 zugeordnet sein. Alternativ ist jede Konstellation von Druckregelmoduln und bedarfsweise ABS-Drucksteuerventilen 8 möglich, welche eine achsseitenweise Regelung oder Steuerung des Bremsschlupfs erlaubt.

Der Gierratensensor 32 misst die Gierrate des Deichselanhängers 1 und meldet ein die momentane Gierrate des Deichselanhängers 1 repräsentierendes Signal an die elektronische Steuerung 10. Ein solches Signal könnte jedoch auch aus den von den Raddrehzahlsensoren 28 gelieferten Signalen gebildet werden, so dass ein Gierratensensor 32 auch entbehrlich ist. Bevorzugt können jedoch auch beide Sensoriken zur Bildung des Signals herangezogen werden.

Der Deichselanhänger 1 ist hier bevorzugt über eine auf dem Zugfahrzeug angeordnete Fahrdynamikregelung wie ESP durch Bremseingriffe seiner Bremsanlage in bekannter Weise fahrdynamisch stabilisierbar, wenn eine fahrdynamisch kritische Fahrsituation wie z.B. übermäßiges Über- oder Untersteuern vorliegt. Alternativ ist keine solche Fahrdynamikregelung vorhanden.

Während einer stabilen Kurvenfahrt, insbesondere ohne Eingriff der Fahrdynamik- oder Fahrstabilitätsregelung wird ein den Kurvenradius der befahrenen Kurve repräsentierendes Signal erzeugt. Das Feststellen einer stabilen Kurvenfahrt und die Bildung des den Kurvenradius der befahrenen Kurve repräsentierenden Signals erfolgt vorzugsweise auf der Grundlage der Signale der Raddrehzahlsensoren 28 bzw. des Gierratensensors 32, insbesondere auf der Basis der Raddrehzahldifferenz zwischen den Raddrehzahlen der kurvenäußeren Räder 18 und der kurveninneren Räder 20, welche dann von der elektronischen Steuerung 10 durch implementierte Auswertealgorithmen ausgewertet werden.

Wenn anhand eines den Kurvenradius der befahrenen Kurve repräsentierenden Signals die elektronische Steuerung 10 dann feststellt, dass der Kurvenradius einen vorgegebenen Kurveninnenradiusschwellwert unterschreitet, d.h., wenn der Kurvenradius beispielsweise relativ klein ist und dadurch Gefahr droht, dass der Deichselanhänger 1 die vorgegebene Kurvenringfläche 12 am kurveninneren Radius 16 nicht einhalten kann und dann zu weit nach innen schert, werden die Radbremsen der kurvenäußeren Räder 18 einer jeden Achse jeweils mit einem derartigen Radbremsschlupf eingebremst, dass ein durch den Pfeil 34 symbolisiertes Giermoment auf den Deichselanhänger 1 erzeugt wird, welches den Deichselanhänger 1 nach außen und dadurch vom kurveninneren Radius 16 der Kurve weg dreht. Dabei werden die kurveninneren Räder 20 vorzugsweise nicht abgebremst. Dieser Fall ist dann gegeben, wenn der Fahrer des Zugfahrzeugs in der Kurve relativ weit innen fährt.

Diese Variante ist in der Figur dargestellt, wobei die in durchgezogenen Linien gezeichneten Pfeile die aufgrund der Bremsung der kurvenäußeren Räder 18 auf diese einwirkenden Bremskräfte 36 symbolisieren, die letztlich das gewünschte Giermoment 34 am Deichselanhänger 1 hervorrufen.

Für den entgegen gesetzten Fall, dass der Fahrer auf der Ringkurvenfläche 12 relativ weit außen fährt und dadurch Gefahr droht, dass der Deichselanhänger 1 die vorgegebene Kurvenringfläche 12 am kurvenäußeren Radius 14 nicht einhalten kann und dann zu weit nach außen schert, wird ebenfalls während einer stabilen Kurvenfahrt, insbesondere ohne Eingriff der Fahrdynamik- oder Fahrstabilitätsregelung ein den Kurvenradius der befahrenen Kurve repräsentierendes Signal erzeugt. Wenn dann anhand dieses Signals festgestellt wird, dass der Kurvenradius einen vorgegebenen Kurvenaußenradiusschwellwert überschreitet, werden die Radbremsen der kurveninneren Räder 20 jeweils mit einem derartigen Radbremsschlupf eingebremst, dass ein Giermoment auf den Deichselanhänger 1 erzeugt wird, welches ihn nach innen und dadurch vom kurvenäußeren Radius 14 der Kurve weg dreht. Dabei werden die kurvenäußeren Räder 18 des Deichselanhängers vorzugsweise nicht abgebremst.

Die mit Hilfe der Raddrehzahlsensoren 28 detektierten Ist-Radbremsschlüpfe der abgebremsten Räder werden anhand eines in der elektronischen Steuerung 10 implementierten Regelalgorithmus auf Soll-Radbremsschlüpfe eingeregelt, welche bevorzugt auf der Basis oder abhängig von der jeweils vorliegenden Gierrate des Deichselanhängers 1 und/oder der Raddrehzahldifferenzen von achsseitenverschiedenen Rädern vorgegeben.

Weiterhin werden die kurveninneren Räder 20 oder die kurvenäußeren Räder 18 vorzugsweise jeweils mit einem tolerierbaren Radbremsschlupf abgebremst, der kleiner als ein vorgegebener Radbremsschlupf ist, um den Reifenverschleiß in Grenzen zu halten.

Das Einbremsen der kurvenäußeren Räder 18 oder der kurveninneren Räder 20 erfolgt bevorzugt erst dann, wenn der Deichselanhänger eine eine vorgegebene Mindestgeschwindigkeit überschreitende Geschwindigkeit aufweist, damit das durch das Einbremsen erzeugte Giermoment 34 groß genug ist, um die gewünschte Wirkung zu erzielen. Da dieses Giermoment 34 jedoch von weiteren Faktoren, wie der Spurbreite, dem Radstand usw. abhängt, ist die Vorgabe einer Mindestgeschwindigkeit nicht zwingend. Die Geschwindigkeit des Deichselanhängers 1 stellt die elektronische Steuerung 10 wiederum über die Signale der Raddrehzahlsensoren 28 fest.

### Bezugszeichenliste

- 1: Deichselanhänger
- 2: Vorderachsen
- 4: Hinterachsen
- 6: 1-Kanal-Druckregelmodul
- 8: ABS-Drucksteuerventil
- 10: elektronische Steuerung
- 12: Kurvenringfläche
- 14: kurvenäußerer Radius
- 16: kurveninnerer Radius
- 18: kurvenäußere Räder
- 20: kurveninnere Räder
- 24: Fahrtrichtung
- 26: 2-Kanal-Druckregelmodul
- 28: Raddrehzahlsensoren
- 30: Anhängerdatenbus
- 32: Gierratensensor
- 34: Giermoment
- 36: Bremskräfte

## Patentansprüche

1. Verfahren zum Steuern der Bremsanlage eines Anhängers (1) einer Zugfahrzeug-Anhängerkombination, insbesondere eines Anhängers (1) mit wenigstens drei Achsen (2a, 2b, 4a-4c), bei dem die Bremsanlage des Anhängers durch eine elektronische Steuerung (10) betätigbar ist und während einer stabilen Kurvenfahrt ein den Kurvenradius der befahrenen Kurve repräsentierendes Signal erzeugt wird, wobei wenn anhand dieses Signals festgestellt wird, dass der Kurvenradius einen vorgegebenen Kurveninnenradiusschwellwert unterschreitet, die Bremsen der kurvenäußeren Räder (18) jeweils mit einem derartigen Radbremsschlupf eingebremst werden, dass ein Giermoment (34) auf den Anhänger (1) erzeugt wird, welches den Anhänger (1) nach außen dreht.

2. Verfahren zum Steuern der Bremsanlage eines Anhängers (1) einer Zugfahrzeug-Anhängerkombination, insbesondere eines Anhängers (1) mit wenigstens drei Achsen (2a, 2b, 4a-4c), bei dem die Bremsanlage des Anhängers (1) durch eine elektronische Steuerung (10) betätigbar ist und während einer stabilen Kurvenfahrt ein den Kurvenradius der befahrenen Kurve repräsentierendes Signal erzeugt wird, wobei wenn anhand dieses Signals festgestellt wird, dass der Kurvenradius einen vorgegebenen Kurvenaußenradiusschwellwert überschreitet, die Bremsen der kurveninneren Räder (20) jeweils mit einem derartigen Radbremsschlupf eingebremst werden, dass ein Giermoment auf den Anhänger (1) erzeugt wird, welches den Anhänger nach innen dreht.

3. Verfahren nach Anspruch 1 oder 2, **dadurch gekennzeichnet, dass** in dem den Kurvenradius der befahrenen Kurve repräsentierenden Signal zumindest eine Gierrate oder eine Raddrehzahldifferenz von Rädern des Anhängers (1) berücksichtigt wird.

4. Verfahren nach einem der vorhergehenden Ansprüche, **dadurch gekennzeichnet, dass** das Einbremsen der kurvenäußeren Räder (18) oder der kurveninneren Räder (20) erst dann erfolgt, wenn der Anhänger (1) eine eine vorgegebene Mindestgeschwindigkeit überschreitende Geschwindigkeit aufweist.

5. Verfahren nach einem der vorhergehenden Ansprüche, **dadurch gekennzeichnet, dass** die kurveninneren Räder (20) oder die kurvenäußeren Räder (18) jeweils mit einem tolerierbaren Radbremsschlupf abgebremst werden, der kleiner als ein vorgegebener Radbremsschlupf ist.

6. Verfahren nach einem der vorhergehenden Ansprüche, **dadurch gekennzeichnet, dass** von der elektronischen Steuerung (10) für jedes abgebremste Rad ein Radbremsschlupf-Sollwert vorgegeben wird, auf welchen der gerade vorliegende Radbremsschlupf-Istwert eingeregelt wird.

7. Vorrichtung zum Steuern einer elektrisch steuerbaren Bremsanlage eines Anhängers (1) einer Zugfahrzeug-Anhängerkombination, insbesondere eines Anhängers (1) mit wenigstens drei Achsen (2a, 2b), beinhaltend eine die Bremsanlage des Anhängers (1) steuernde elektronische Steuerung (10) und eine Sensoreinrichtung (28, 32), die während einer stabilen Kurvenfahrt ein den Kurvenradius der befahrenen Kurve repräsentierendes Signal erzeugt und **dadurch gekennzeichnet, dass** die elektronische Steuerung (10) ausgebildet ist, dass wenn sie anhand dieses Signals feststellt, dass der Kurvenradius einen vorgegebenen Kurveninnenradiusschwellwert unterschreitet, die Bremsen der kurvenäußeren Räder (18) jeweils mit einem derartigen Radbremsschlupf eingebremst werden, dass ein Giermoment (34) auf den Anhänger (1) erzeugt wird, welches den Anhänger (1) nach außen dreht.

8. Vorrichtung zum Steuern einer elektrisch steuerbaren Bremsanlage eines Anhängers (1) einer Zugfahrzeug-Anhängerkombination, insbesondere eines Anhängers mit wenigstens drei Achsen (2a, 2b, 4a-4c), beinhaltend eine die Bremsanlage des Anhängers steuernde elektronische Steuerung (10) und eine Sensoreinrichtung (28, 32), die während einer stabilen Kurvenfahrt ein den Kurvenradius der befahrenen Kurve repräsentierendes Signal erzeugt und **dadurch gekennzeichnet, dass** die elektronische Steuerung (10) ausgebildet ist, dass wenn sie anhand dieses Signals feststellt, dass der Kurvenradius einen vorgegebenen Kurvenaußenradiusschwellwert überschreitet, die Bremsen der kurveninneren Räder (20) jeweils mit einem derartigen Radbremsschlupf eingebremst werden, dass ein Giermoment auf den Anhänger (1) erzeugt wird, welches den Anhänger (1) nach innen dreht.

9. Vorrichtung nach Anspruch 7 oder 8, **dadurch gekennzeichnet, dass** die Sensoreinrichtung, welche das den Kurvenradius der befahrenen Kurve repräsentierende Signal erzeugt, einen Gierratensensor (32) und/oder Raddrehzahlsensoren (28) des Anhängers (1) beinhaltet.

10. Vorrichtung nach einem der Ansprüche 7 bis 9, **dadurch gekennzeichnet, dass** der Anhänger (1) an wenigstens einer Achse (2a, 2b) ein 1-Kanal-Druckregelmodul (6) sowie auf jeder Achsseite zur radindividuellen oder radgruppenindividuelle Bremsschlupfsteuerung oder -regelung ein ABS-Drucksteuerventil (8) aufweist, wobei die elektronische Steuerung (10) ausgebildet ist, dass sie zum bremsschlupfgeregelten Abbremsen von kurvenäußeren Rädern (18) oder von kurveninneren Rädern (20) das zugeordnete ABS-Drucksteuerventil (8) entsprechend dem vorgegebenen Radbremsschlupf getaktet in Öffnungs- und Schließstellung geschaltet und das dem anderen Rad oder den anderen Rädern dieser Achse zugeordnete ABS-Drucksteuerventil (8) ausschließlich in Öffnungsstellung geschaltet wird.

11. Vorrichtung nach einem der Ansprüche 7 bis 10, **dadurch gekennzeichnet, dass** der Anhänger (1) an wenigstens einer Achse (4a-4c) ein Mehrkanal-Druckregelmodul (26) aufweist, wobei den Rädern oder dem Rad jeder Achsseite ein eigener Kanal für eine radindividuelle oder radgruppenindividuelle Bremsschlupfsteuerung oder -regelung zugeordnet ist.

12. Anhänger (1) mit einer Vorrichtung nach einem der Ansprüche 7 bis 11.

13. Anhänger (1) nach Anspruch 12, **dadurch gekennzeichnet, dass** er ein Anhänger mit wenigstens drei Achsen (2a, 2b, 4a-4c) ist.

14. Anhänger (1) nach Anspruch 12 oder 13, **dadurch gekennzeichnet, dass** er ein Deichselanhänger oder ein Auflieger ist.

## Claims

1. A method for controlling the brake assembly of a trailer (1) of a tractor-trailer combination, in particular a trailer (1) having at least three axles (2a, 2b, 4a-4c), in which the brake assembly of the trailer can be actuated by an electronic control device (10) and a signal representing the curve radius of the curve travelled is generated during stable cornering, where, if it is determined using this signal that the curve radius falls below a predetermined inner curve radius threshold value, the brakes (18) of the wheels on the outside of the curve are each braked with a wheel-brake slip such that a yaw torque (34) is generated on the trailer (1) that pushes the trailer (1) outwards.

2. A method for controlling the brake assembly of a trailer (1) of a tractor-trailer combination, in particular a trailer (1) having at least three axles (2a, 2b, 4a-4c), in which the brake assembly of the trailer (1) can be actuated by an electronic control device (10) and a signal representing the curve radius of the curve travelled is generated during stable cornering, where, if it is determined using this signal that the curve radius exceeds a predetermined outer curve radius threshold value, the brakes (20) of the wheels on the inside of the curve are each braked with a wheel-brake slip such that a yaw torque (34) is generated on the trailer (1) that pushes the trailer (1) inwards.

3. A method according to claim 1 or 2, **characterised in that** at least a yaw rate or a wheel speed difference between wheels of the trailer (1) is taken into account in the signal representing the curve radius of the curve travelled.

4. A method according to any one of the previous claims, **characterised in that** the wheels (18) on the outside of the curve or the wheels (20) on the inside of the curve are not braked until the trailer (1) has a speed in excess of a predetermined minimum speed.

5. A method according to any one of the previous claims, **characterised in that** the wheels (20) on the inside of the curve or the wheels (18) on the outside of the curve are each braked with a tolerable wheel-brake slip that is smaller than a predetermined wheel-brake slip.

6. A method according to any one of the previous claims, **characterised in that** for each braked wheel the electronic control device (20) predetermines a wheel-brake-slip reference value to which the wheel-brake slip at any given point is adjusted.

7. A device for controlling an electrically controllable brake assembly of a trailer (1) of a tractor-trailer combination, in particular of a trailer (1) having at least three axles (2a, 2b), containing an electronic control device (10) that controls the brake assembly of the trailer (1) and a sensor device (28, 32) that generates a signal representing the curve radius of the curve travelled during stable cornering, and is **characterised in that** the electronic control device (10) is designed such that when it determines from this signal that the curve radius has fallen below a predetermined inner curve radius threshold value the brakes of the wheels (18) on the outside of the curve are each braked with a wheel-brake slip such that a yaw moment (34) is generated on the trailer (1) that pushes the trailer (1) outwards.

8. A device for controlling an electrically controllable brake assembly of a trailer (1) of a tractor-trailer combination, in particular a trailer (1) having at least three axles (2a, 2b, 4a-4c), containing an electronic control device (10) that controls the brake assembly of the trailer and a sensor device (28, 32) that generates a signal representing the curve radius of the curve travelled during stable cornering, and is **characterised in that** the electronic control system (10) is designed such that when it determines from this signal that the curve radius has exceeded a predetermined outer curve radius threshold value the brakes of the wheels (20) on the inside of the curve are each braked with a wheel-brake slip such that a yaw moment is generated on the trailer (1) that pushes the trailer (1) inwards.

9. A device according to claim 7 or 8, **characterised in that** the sensor device that generates the signal representing the curve radius of the curve travelled contains a yaw rate sensor (32) and/or wheel-speed sensors (28) of the trailer (1).

10. A device according to any one of claims 7 to 9, **characterised in that** the trailer (1) has a single-channel pressure-control module (6) on at least one axle (2a, 2b) and an ABS pressure control valve (8) on each axle side for the open- or closed-loop controlling of brake slip on individual wheels or groups of wheels, the electronic control device (10) being designed such that it is switches the assigned ABS pressure-control valve (8) into the open or the closed position clocked according to the predetermined wheel-brake slip in order to brake wheels (18) on the outside of the curve or wheels (20) on the inside of the curve controlled according to brake slip, and the ABS pressure-control valve (8) assigned to the other wheel or wheels on this axle is switched to the open position only.

11. A device according to any one of claims 7 to 10, **characterised in that** the trailer (1) has a multi-channel pressure-control module (26) on at least one axle (4a-4c), the wheels or wheel of each axle being assigned a dedicated channel for the open- or closed-loop controlling for an individual wheel or an individual group of wheels.

12. A trailer (1) having a device according to any one of claims 7 to 11.

13. A trailer (1) according to claim 12, **characterised in that** it is a trailer that has at least three axles (2a, 2b, 4a-4c).

14. A trailer (1) according to claim 12 or 13, **characterised in that** it is a drawbar trailer or a semi-trailer.

## Revendications

1. Procédé de commande du système de frein d'une remorque (1) d'une combinaison d'un véhicule de traction et d'une remorque, notamment d'une remorque (1) ayant au moins trois essieux (2a, 2b, 4b-4c), dans lequel le système de frein de la remorque peut être actionné par une commande (10) électronique et, pendant un trajet stable en virage, on produit un signal représentant le rayon de courbure du virage emprunté, dans lequel, si l'on constate, à l'aide de ce signal, que le rayon de courbure passe en-dessous d'une valeur de seuil de rayon intérieur de virage donné à l'avance, on serre les freins des roues (18) à l'extérieur du virage respectivement avec un glissement de frein de roue tel qu'il est produit sur la remorque (1) un couple (34) de lacet, qui fait tourner la remorque (1) vers l'extérieur.

2. Procédé de commande du système de frein d'une remorque (1) d'une combinaison d'un véhicule de traction et de remorque, notamment d'une remorque (1) ayant au moins trois essieux (2a, 2b, 4b-4c), dans lequel le système de frein de la remorque peut être actionné par une commande (10) électronique et, pendant un trajet stable en virage, on produit un signal représentant le rayon de courbure du virage emprunté, dans lequel si l'on constate à l'aide de ce signal que le rayon de courbure passe en-dessous d'une valeur de seuil de rayon extérieur de virage donné à l'avance, on serre les freins des roues (20) à l'intérieur du virage respectivement avec un glissement de frein de roue tel qu'il est produit sur la remorque (1) un couple de lacet, qui fait tourner la remorque (1) vers l'intérieur.

3. Procédé suivant la revendication 1 ou 2, **caractérisé en ce que**, dans le signal représentant le rayon de courbure du virage emprunté, on tient compte au moins d'un taux de lacet ou d'une différence de vitesse de rotation des roues de la remorque (1).

4. Procédé suivant l'une des revendications précédentes, **caractérisé en ce que** le freinage des roues (18) extérieures au virage ou des roues (20) intérieures au virage n'a lieu que si la remorque (1) a une vitesse dépassant une vitesse minimum donnée à l'avance.

5. Procédé suivant l'une des revendications précédentes, **caractérisé en ce que** l'on freine les roues (20) intérieures ou virage ou les roues (18) extérieures au virage respectivement avec un glissement de freinage de roues tolérable, qui est plus petit qu'un glissement de freinage de roue donnée à l'avance.

6. Procédé suivant l'une des revendications précédentes, **caractérisé en ce qu'**il est prescrit par la commande (10) électronique, pour chaque roue freinée, une valeur de consigne de glissement de freinage de roue, sur laquelle la valeur réelle de glissement de freinage de roue présente en cours est réglée.

7. Dispositif de commande d'une installation de freinage pouvant être commandé électriquement d'une remorque (1) d'une combinaison d'un véhicule de tracteur et d'une remorque, notamment d'une remorque (1) ayant au moins trois essieux (2a, 2b) comportant une commande (10) électronique commandant l'installation de frein de la remorque (1) et un dispositif (28, 32) capteur, qui produit, pendant un trajet stable en virage, un signal représentant le rayon de courbure du virage emprunté et **caractérisé en ce que** la commande (10) électronique est constituée de manière à ce que, lorsqu'elle constate à l'aide de ce signal, que le rayon de courbure passe en-dessous d'une valeur de seuil de rayon intérieur de virage donnée à l'avance, on serre les freins des roues (18) à l'extérieur du virage respectivement avec un glissement de frein de roue tel qu'il est produit sur la remorque (1) un couple (34) de lacet, qui fait tourner la remorque (1) vers l'extérieur.

8. Dispositif de commande d'une installation de freinage pouvant être commandée électriquement d'une remorque (1) d'une combinaison d'un véhicule de tracteur et d'une remorque, notamment d'une remorque (1) ayant au moins trois essieux (2a, 2b, 4a-4c) comportant une commande (10) électronique commandant l'installation de frein de la remorque (1) et un dispositif (28, 32) capteur, qui produit pendant un trajet stable en virage, un signal représentant le rayon de courbure du virage emprunté et **caractérisé en ce que** la commande (10) électronique est constituée de manière à ce que, lorsqu'elle constate à l'aide de ce signal, que le rayon de courbure passe en-dessous d'une valeur de seuil de rayon extérieur de virage donnée à l'avance, on serre les freins des roues (20) à l'intérieur du virage respectivement avec un glissement de frein de roue tel qu'il est produit sur la remorque (1) un couple de lacet, qui fait tourner la remorque (1) vers l'intérieur.

9. Dispositif suivant la revendication 7 ou 8, **caractérisé en ce que** le dispositif capteur, qui produit le signal représentant le rayon de courbure du virage emprunté comporte un capteur (32) de mouvement de lacet et/ou des capteurs (28) de la vitesse de rotation des roues de la remorque (1).

10. Dispositif suivant l'une des revendications 7 à 9, **caractérisé en ce que** la remorque (1) a, sur au moins un essieu (2a, 2b), un module (6) de régulation de la pression à un canal, ainsi que sur chaque côté d'essieu, pour la commande de la régulation du glissement de frein, de manière individuelle à une roue ou de manière individuelle à un groupe de roues, une soupape (8) de commande de la pression ABS, la commande (10) électronique étant constituée de manière à mettre en cadence, en position d'ouverture et de fermeture, pour le freinage régulé en glissement de frein de roues (18) extérieures au virage ou de roues (20) intérieures au virage, la soupape (8) de commande de pression ABS associée en fonction du glissement de freinage de roue donné à l'avance et de manière à mettre exclusivement en position d'ouverture la soupape (8) de commande de pression ABS associée à l'autre roue ou aux autres roues de cet essieu.

11. Dispositif suivant l'une des revendications 7 à 10, caractérisé en ce la remorque (1) a un module (26) de régulation de la pression à plusieurs canaux sur au moins un essieu (4a-4c), dans lequel aux roues ou à la roue de chaque côté de l'essieu est associé un canal propre pour une commande ou une régulation individuelle à la roue ou individuelle à un groupe de roues du glissement de freinage.

12. Remorque (1) ayant un dispositif suivant l'une des revendications 7 à 11.

13. Remorque (1) suivant la revendication 12, **caractérisée en ce que** c'est une remorque ayant au moins trois essieux (2a, 2b, 4a-4c).

14. Remorque (1) suivant la revendication 12 ou 13, **caractérisée en ce que** c'est une remorque à fourche d'attelage ou une semi-remorque.
